# EUROPÄISCHE PATENTANMELDUNG

(11) **EP 2 228 703 A1**
(43) Veröffentlichungstag der Anmeldung: **15.09.2010**
(21) Anmeldenummer: 09003497.6
(22) Anmeldetag: 10.03.2009
(51) Int. Cl.: G05B 23/02

(54) **Verfahren und Vorrichtung zur optischen Überwachung von Komponenten**

(71) Anmelder: Siemens Aktiengesellschaft, 80333 München (DE)
(72) Erfinder: Kowalski, Waldemar, 45472 Mülheim an der Ruhr (DE); Lehmann, Christoph, Dr., 47506 Neukirchen-Vluyn (DE)

(57) **Zusammenfassung**

Mittels einer geeigneten Digitalkamera, die im Raum so angebracht wird, dass sie einen kritischen Bereich einer Komponente (2, 3) gut erfasst, soll dieser Bereich visuell überwacht werden, wobei die Digitalkamera ein erstes digitales Bild und ein zweites digitales Bild aufnimmt und über ein Auswertesystem (7) die beiden Bilder miteinander verglichen werden, und sobald ein Unterschied erkannt wird, der einen Grenzwert überschreitet, eine Störmeldung abgesendet wird.

## Beschreibung

Die Erfindung betrifft ein System und ein Verfahren zur Überwachung einer Komponente, wobei das System eine Digitalkamera, ein Auswertesystem und eine Datenübertragungseinrichtung umfasst.

In modernen Investitionsgütern ist eine lange Lebensdauer der Komponenten erforderlich, bei gleichzeitig hoher Verfügbarkeit. Oft werden Investitionsgüter wie z. B. Generatoren, Dampfturbinen oder Gasturbinen über mehrere Jahre hinweg betrieben. Dieser Betrieb erfolgt oft im Dauerbetrieb. Eine Überwachung der Komponenten ist daher dringend erforderlich. Es ist bekannt, beispielsweise das Radialspiel in Dampfturbinen mittels Abstandssensoren automatisch und zyklisch zu erfassen. Sobald ein Abstandssensor einen zu geringen Abstand zwischen einem rotierenden und einem feststehenden Bauteil erfasst, geht eine Störmeldung von einem Leitsystem.

Oftmals erfahren die im Dauerbetrieb betriebenen Komponenten Schwingungsanregungen, die zu Beschädigungen in Form von Brüchen oder Abrissen führen können. Des Weiteren ist ein Szenario denkbar, bei dem ein Kühlsystem versagen könnte, was zu einer unerwünschten Temperaturerhöhung führt. Darüber hinaus sind gerade die schleichend auftretenden Kleinschäden, die mit der Zeit zu einem größeren Schaden führen, gefährlich. Solche schleichenden und größer werdenden Schäden sollten frühzeitig erkannt werden, bevor ein Schaden entsteht.

Um einen Schaden frühzeitig zu erkennen, werden die Komponenten sporadisch durch ein Wartungspersonal auf Beschädigungen überprüft. Die Überwachung der Komponenten erfolgt auch zyklisch mit Hilfe von Überwachungssystemen. Wünschenswert wäre es, ein System zu haben, mit dem sehr frühzeitig Schäden an einer Komponente erfasst werden können.

Es ist daher Aufgabe der Erfindung, ein System anzugeben, mit dem Schäden an einer Komponente frühzeitig erkannt werden. Darüber hinaus ist es eine Aufgabe der Erfindung, ein Verfahren zur Überwachung einer Komponente anzugeben, mit dem Schäden frühzeitig erkannt werden können.

Die Aufgabe wird gelöst durch ein System zur Überwachung von Komponenten, wobei das System eine Digitalkamera, ein Auswertesystem und eine Datenübertragungseinrichtung umfasst, wobei die Datenübertragungseinrichtung von der Digitalkamera erfasste digitale Bilder zum Auswertesystem überträgt, wobei das Auswertesystem derart ausgebildet ist, dass eine Störmeldung geht, sobald ein Unterschied zwischen einem ersten und einem zweiten von der Digitalkamera erfassten digitalen Bild erkannt wird.

Die auf das Verfahren hin gerichtete Aufgabe wird gelöst durch ein Verfahren zur Überwachung einer Komponente, wobei ein erstes digitales Bild der Komponente aufgenommen wird und mit einem zweiten digitalen Bild mittels eines Auswertesystems verglichen wird, wobei das erste und das zweite digitale Bild mit einer digitalen Kamera erstellt wird, wobei vom Auswertesystem eine Störmeldung geht, wenn ein Grenzwert überschritten wird.

Erfindungsgemäß soll demnach ein optisches Überwachungsverfahren in Form einer Digitalkamera eingesetzt werden. Digitalkameras bieten den großen Vorteil, dass die erfassten Informationen abgespeichert und mit zeitlich nachfolgenden Informationen verglichen werden können. Die zu überwachende Komponente kann beispielsweise ein Generator, eine Dampfturbine oder eine Gasturbine sein. Bei einem Generator ist insbesondere der Ständerwickelkopf eine kritische Komponente, die auf Schädigungen überwacht werden sollte. Eine Digitalkamera erfasst ein Bild der Komponente und speichert dieses Bild zunächst als erstes digitales Bild ab. Ein zeitlich zum ersten digitalen Bild später entstehendes zweites digitales Bild wird ebenfalls abgespeichert und in einem Auswertesystem mit dem ersten digitalen Bild verglichen. Mit der Digitalkamera wird beispielsweise die Form der Komponente erfasst. Dabei kann der Abstand zweier Punkte der Komponente mit dem ersten Bild der Digitalkamera erfasst werden und im Auswertesystem gespeichert werden. Sobald im zweiten digitalen Bild eine Veränderung des Abstands erfasst wird, wobei diese Veränderung einen Grenzwert überschreitet, geht eine Störmeldung.

Neben der Form kann die Digitalkamera die Farbe als Eingangsgröße liefern. Das bedeutet, dass die Komponente farblich aufgenommen wird und ein Bild in Farbe als erstes digitales Bild abgespeichert wird. Änderungen der Farbe gehen beispielsweise einher durch eine ungewollte Verschmutzung oder beispielsweise durch eine Erhöhung der Temperatur, die unerwünscht ist. Wird im zweiten digitalen Bild, das ebenfalls in Farbe aufgenommen wird, eine deutliche Veränderung der Farbe ermittelt, wird vom Auswertesystem eine Störmeldung abgesendet.

In den Unteransprüchen sind vorteilhafte Weiterbildungen angegeben.

In einer ersten vorteilhaften Weiterbildung werden im Auswertesystem Grenzwerte definiert, die als Eingangsgröße die Information aus dem ersten digitalen Bild und dem zweiten digitalen Bild berücksichtigt und miteinander vergleicht. Sobald ein Unterschied zwischen den beiden Informationen erkennbar ist und einen vorher definierten Grenzwert überschreitet, wird eine Störmeldung vom Auswertesystem abgesendet.

Die Störmeldung kann hierbei optisch erfolgen, d. h. über eine Lampe dargestellt werden. Genauso gut kann die Störmeldung über ein akustisches Signal gemeldet werden. Ebenso ist denkbar, dass die Störmeldung über SMS oder über MMS an ein Wartungspersonal gesendet wird.

Die Datenübertragung zwischen der Digitalkamera und dem Auswertesystem erfolgt über eine Datenübertragungseinrichtung, wobei die Datenübertragung über eine kabellose Leitung erfolgt.

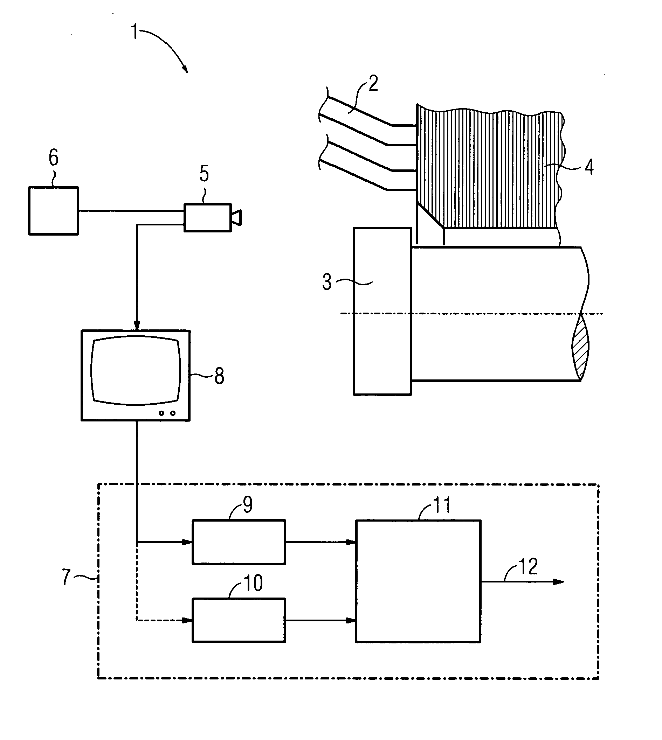

Ein Ausführungsbeispiel der Erfindung wird anhand der Figur näher erläutert. Es zeigt:
- Figur: eine schematische Darstellung des Systems zur Überwachung.

Die Figur zeigt eine schematische Darstellung des Systems 1 zur Überwachung von Komponenten. Die Komponente ist beispielsweise ein Ständerwickelkopf 2 und ein Läufer 3 eines Generators. Der Ständerwickelkopf 2 ist üblicherweise an einem Ende eines Ständer- bzw. Blechpakets 4 angeordnet.

Über eine Digitalkamera 5 wird ein Bild des Läufers 3 und des Ständerwickelkopfes 2 erfasst. Die Digitalkamera 5 wird dabei über eine Steuerungseinheit 6 angesteuert. Mit der Steuerungseinheit 6 kann beispielsweise die Bildfrequenz, die Farbintensität, der Abstand zweier Punkte, die Lichtquelle eingestellt werden. Das mit der Bildkamera 5 erfasste Bild wird zu einem Auswertesystem 7 übertragen. Dazu ist eine nicht näher dargestellte Datenübertragungseinrichtung vorgesehen. In der in der Figur dargestellten Ausführungsform erfolgt die Datenübertragung von der Digitalkamera 5 zum Auswertesystem 7 über eine Kabelleitung. In alternativen Ausführungsformen kann die Datenübertragung von der Digitalkamera 5 zum Auswertesystem 7 kabellos erfolgen.

Das in der Digitalkamera 5 erfasste erste digitale Bild kann auf einem Bildschirm 8 dargestellt werden. Somit kann ein Wartungspersonal relativ aktuelle Bilder der zu überwachenden Komponente einsehen. Im Auswertesystem 7 wird in einer ersten Speichereinheit 9 das erste digitale Bild abgespeichert. Das erste digitale Bild wird somit zu einem festen Zeitpunkt aufgenommen und kann als Fingerprint bezeichnet werden. In der zweiten Speichereinheit 10 wird ebenso ein zweites digitales Bild abgespeichert, das zu einem späteren Zeitpunkt aufgenommen wird. Demzufolge könnte das zweite digitale Bild die zu überwachende Komponente in einem bereits gestörten Zustand aufnehmen. Das bedeutet, dass ein eventuell auftretender Schaden im Ständerwickelkopf 2 oder im Läufer 3 bereits frühzeitig erkannt werden kann. Dazu wird das erste digitale Bild und das zweite digitale Bild zu einem Vergleichssystem 11 übertragen.

Im Vergleichssystem 11 werden das erste digitale Bild aus der ersten Speichereinheit 9 und das zweite digitale Bild aus der zweiten Speichereinheit 10 Punkt für Punkt durch Differenzbildung miteinander verglichen. Sobald die Differenzbildung ergibt, dass ein vorher festgelegter Grenzwert überschritten wird, wird eine Störmeldung über einen Ausgang 12 abgesendet. Die Störmeldung kann darüber hinaus noch graduiert sein. Das bedeutet, dass die Störmeldung verschiedene Formen der Abweichung darstellen kann. Beispielsweise könnte eine Störmeldung belegt sein für Änderungen, die unter dem Grenzwert liegen und somit keine Änderung darstellen. Des Weiteren kann die Störmeldung die Information liefern, dass eine leichte bzw. unwesentliche Änderung erfolgt ist. Die nächste Stufe der Störmeldungseinheit könnte sein, dass der Grenzwert deutlich überschritten wurde und somit eine alarmierende Störmeldung ausgesendet wird.

Durch den Punkt- bzw. Matrixvergleich zwischen dem ersten digitalen Bild (Fingerprint) und dem zweiten digitalen Bild ist somit eine einfache und visuell sofort nachvollziehbare Erkennung von beispielsweise Verformungen, Rissen, Brüchen usw. möglich. Die Digitalkamera 5 wird dabei so positioniert, dass sie möglichst kritische Bereiche erfasst und digitale Bilder gleichbleibender Qualität liefert. Das bedeutet, dass die Beleuchtungs- und Aufnahmezeiten von den zeitlich nacheinander aufgenommenen Bildern nahezu identisch sein sollten. Das Auswertesystem 7 umfasst daher eine Software, mit der es möglich ist, die Unterschiede zwischen dem ersten digitalen und dem zweiten digitalen Bild zu erkennen. Als Überwachungsgröße ist sowohl die Form der zu überwachenden Komponente als auch deren Farbe möglich. Sofern die Form der zu überwachenden Komponente aufgenommen wird, sollte mittels der Digitalkamera 5 und dem Auswertesystem 7 der Abstand zweier Punkte auf der Komponente überwacht werden. Sobald dieser Abstand einen bestimmten Grenzwert überschreitet, sollte eine Störmeldung am Ausgang 12 anliegen.

Neben der Form kann auch die Farbe der zu überwachenden Komponente erfasst werden. Dies erfordert allerdings, dass die Beleuchtung und Farbintensität konstant über der Zeit ist. Eine Änderung der Farbe kann z. B. bedeuten, dass die Temperatur der Komponente sich ändert. Das könnte bedeuten, dass eine Kühlung ausgefallen ist, was zu einer Erhöhung der Temperatur der Komponente führt.

## Patentansprüche

1. System (1) zur Überwachung von Komponenten (2, 3),
wobei das System (1) eine Digitalkamera (5), ein Auswertesystem (7) und eine Datenübertragungseinrichtung umfasst,
wobei die Datenübertragungseinrichtung von der Digitalkamera (5) erfasste digitale Bilder zum Auswertesystem (7) überträgt,
wobei das Auswertesystem (7) derart ausgebildet ist, dass eine Störmeldung geht, sobald ein Unterschied zwischen einem ersten und einem zweiten von der Digitalkamera (5) erfassten digitalen Bild erkannt wird.

2. System (1) nach Anspruch 1,
wobei die vom Auswertesystem (7) erkannten Unterschiede, die Form und/oder die Farbe der Komponente (2, 3) berücksichtigt.

3. System (1) nach Anspruch 1,
wobei das erste digitale Bild in einer ersten Speichereinheit (9) gespeichert wird und Grenzwerte definiert sind,
wobei die Störmeldung geht, wenn die vom zweiten digitalen Bild erfassten Informationen den Grenzwert überschreiten.

4. System (1) nach einem der vorhergehenden Ansprüche,
wobei das Auswertesystem (7) eine Software umfasst, mit der die Unterschiede zwischen dem ersten digitalen und dem zweiten digitalen Bild erkannt werden.

5. System (1) nach einem der vorhergehenden Ansprüche,
wobei die Datenübertragungseinrichtung Daten über eine kabellose Leitung überträgt.

6. System (1) nach einem der vorhergehenden Ansprüche,
wobei ein Abstand zu einem Punkt auf der Komponente (2, 3) vom Auswertesystem (7) ausgewertet wird,
wobei das Auswertesystem (7) derart ausgebildet ist, dass, sobald der Abstand zu dem Punkt einen Grenzwert überschreitet, die Störmeldung geht.

7. Verfahren zur Überwachung einer Komponente (2, 3),
wobei ein erstes digitales Bild der Komponente (2, 3) aufgenommen wird und mit einem zweiten digitalen Bild mittels eines Auswertesystem (7) verglichen wird,
wobei das erste und das zweite digitale Bild mit einer Digitalkamera (5) erstellt wird,
wobei vom Auswertesystem (7) eine Störmeldung geht, wenn ein Grenzwert überschritten wird.

8. Verfahren nach Anspruch 7,
wobei im Auswertesystem (7) die Form und/oder die Farbe der Komponente (2, 3) berücksichtigt wird.
